# EUROPÄISCHE PATENTSCHRIFT

(11) **EP 0 607 500 B1**
(45) Veröffentlichungstag und Bekanntmachung des Hinweises auf die Patenterteilung: **03.01.1996**
(21) Anmeldenummer: 93115488.4
(22) Anmeldetag: 25.09.1993
(51) Int. Cl.: B62B 3/06

(54) **Verstellbare Bodenplatte für Flurförderzeug**
Adjustable platform for pallet trucks
Plate-forme réglable pour transpalette

(30) Priorität: 21.01.1993 DE 9300762 U
(43) Veröffentlichungstag der Anmeldung: 27.07.1994
(73) Patentinhaber: Jungheinrich Aktiengesellschaft, D-22047 Hamburg (DE)
(72) Erfinder: Behncke, Christoph, Dipl.-Ing., D-23795 Bad Segeberg (DE); Lohmeier, Joachim, Dipl.-Ing., D-22926 Ahrensburg (DE)
(74) Vertreter: Dipl.-Ing. H. Hauck, Dipl.-Ing. E. Graalfs, Dipl.-Ing. W. Wehnert, Dr.-Ing. W. Döring

(56) Entgegenhaltungen:
- DE-A- 2 234 710
- US-A- 4 018 473
- PATENT ABSTRACTS OF JAPAN vol. 5, no. 72 (M-68)(744) 14. Mai 1981 & JP-A-56 021 977 (TOYODA JIDO SHOKKI SEISAKUSHO)

## Beschreibung

Die Erfindung bezieht sich auf eine verstellbare Bodenplatte für ein Flurförderzeug nach dem Oberbegriff des Anspruchs 1.

Es sind Lösungen bekannt, bei denen die Anpassung an die Beinlängen vom 5. weiblichen Perzentil bis zum 95. männlichen Perzentil durch Verstellen der Sitzhöhe versucht wird. Hierbei ist die Winkelstellung des Fußes zum Unterschenkel nicht korrigierbar. Die Lage des Fahrers zu Lenkrad und Armauflage wird dabei ungünstig verändert, sofern diese beiden Bauteile nicht ebenfalls getrennt einstellbar sind. Wenn jedoch Sitz, Armauflage und Lenkrad verstellbar gestaltet sind, fehlt dem Fahrer jeder Bezugspunkt für eine korrekte Einstellung. Er ist damit überfordert. Es ist ferner ein Flurförderzeug bekanntgeworden, bei dem eine Reihe von Verstellmöglichkeiten vorgesehen ist. So können Armlehne und Lenkrad verstellt werden. Ferner kann die Bodenplatte sowohl in der Höhe als auch im Neigungswinkel verstellt werden. Abgesehen davon, daß es aufwendig ist, so viele Verstellmöglichkeiten vorzusehen, ist es für den Fahrer wiederum schwierig, die für ihn günstigste Position herauszufinden.

Der Erfindung liegt die Aufgabe zugrunde, eine verstellbare Bodenplatte für ein Flurförderzeug zu schaffen, die in der normalen Bedienhaltung ohne großen Kraftaufwand in eine ergonomisch richtige angenehme Stellung bringbar ist.

Diese Aufgabe wird gelöst durch die Merkmale des Anspruchs 1.

Erfindungswesentlich ist, daß die Bodenplatte mit einem seitlichen höhenverstellbaren Schlitten gekoppelt ist, der mit Hilfe einer Verstellvorrichtung in einer gegebenen Höhe einstellbar ist. Eine weitere Verstellvorrichtung greift gelenkig in einem Abstand zur ersten Verstellvorrichtung an der Bodenplatte an, um die Bodenplatte gegenüber dem Anlenkpunkt der ersten Verstellvorrichtung zu verschwenken. Dadurch kann mit Hilfe des Schlittens die Bodenplatte zwischen den Endpositionen in beliebigen Höhenstellungen verriegelt werden. Ferner kann sie unabhängig von der Höhenstellung eine vorgegebene Neigung erhalten.

Bei extrem schmalen Quersitzgeräten ist normalerweise kaum eine ergonomische Körperhaltung möglich, da der Fahrer die Füße zum Ausgleich der unterschiedlichen Beinlängen zwischen dem 5. weiblichen Perzentil und dem 95. männlichen Perzentil nicht durch Vor- bzw. Zurückschieben der Füße ausgleichen kann. Durch die Höhenverstellung der Bodenplatte ist es nun möglich, daß zum Beispiel der Fahrer mit langen Unterschenkeln die Bodenplatte so weit herunterschiebt, daß die Oberschenkel auf der Sitzfläche aufliegen und sich ein ergonomisch korrekter Winkel von 90° oder mehr zwischen Oberschenkel und Unterschenkel einstellt. Durch die Neigungsverstellung wird die Bodenplatte so eingestellt, daß sich ein ergonomisch korrekter Winkel von 90° oder mehr zwischen Fuß und Unterschenkel einstellt.

Die Erfindung kann auch bei breiteren Quersitzgeräten oder bei Frontsitzstaplern oder anderen Fahrzeugen vorteilhaft eingesetzt werden, damit eine Auflage der Oberschenkel auf der Sitzfläche für Personen vom 5. weiblichen Perzentil bis zum 95. männlichen Perzentil möglich ist bei gleichzeitig angenehmer Winkelstellung des Fußes. Dies ist besonders wichtig, wenn in quasistatischer Haltung mit dem Fuß Fahr- oder Gaspedale betätigt werden müssen.

Die Verstellvorrichtungen weisen vorzugsweise eine Feder auf, wobei die eingenommenen Positionen der Bodenplatte bzw. des Schlittens durch eine geeignete Verriegelung festlegbar sind. Besonders vorteilhaft ist, als Federn blockierbare Gasdruckfedern zu verwenden. In der ersten Verstellvorrichtung hebt die Gasdruckfeder den Schlitten und damit die Bodenplatte an, wenn sie entriegelt ist. Die Entriegelung kann durch einfache Betätigung vom Fahrer erfolgen, beispielsweise über einen Bowdenzug. Bei einer Gasdruckfeder in der zweiten Verstellvorrichtung wird die Bodenplatte zum Beispiel nach oben gekippt, solange die Entriegelung der Gasdruckfeder andauert. In beiden Fällen kann durch Gewichtsbelastung die Bodenplatte nach unten gedrückt und die Neigung rückgängig gemacht werden.

Es sind verschiedene konstruktive Möglichkeiten denkbar, den Schlitten vertikal zu führen. Einer besteht erfindungsgemäß darin, daß der Schlitten auf beiden Seiten Führungsrollen aufweist, die in fahrzeugfesten Führungen geführt sind. Die Führungen können zum Beispiel U-förmigen Querschnitt aufweisen. Eine weitere Führung zwischen den Seiten des Schlittens, mit der eine schlittenfeste Rolle zusammenwirkt, sichert eine einwandfreie reibungsarme Führung, so daß ein Verklemmen vermieden ist.

Die zweite Verstellvorrichtung kann zwar unmittelbar an der Bodenplatte angreifen, um eine Neigungsverstellung zu bewerkstelligen. Eine Ausgestaltung der Erfindung sieht indessen vor, daß an der Bodenplatte ein Neigungsbauteil gelenkig angreift, das mit der zweiten Verstellvorrichtung verbunden ist. Das Neigungsbauteil ist seinerseits vertikal im Schlitten gelagert und übernimmt einen Teil der Aufstandskraft auf der Bodenplatte.

Die Bodenplatte kann nach einer weiteren Ausgestaltung der Erfindung um die Anlenkachse der ersten Verstellvorrichtung hochklappbar sein. Dadurch sind darunterliegende Bauteile frei zugänglich. Der Raum unter der Bodenplatte wird nicht durch Bauteile der Höhen- und Neigungsverstellung eingenommen, da sich diese alle in einer Seitenwand befinden.

Die Erfindung wird nachfolgend anhand von Zeichnungen näher erläutert.

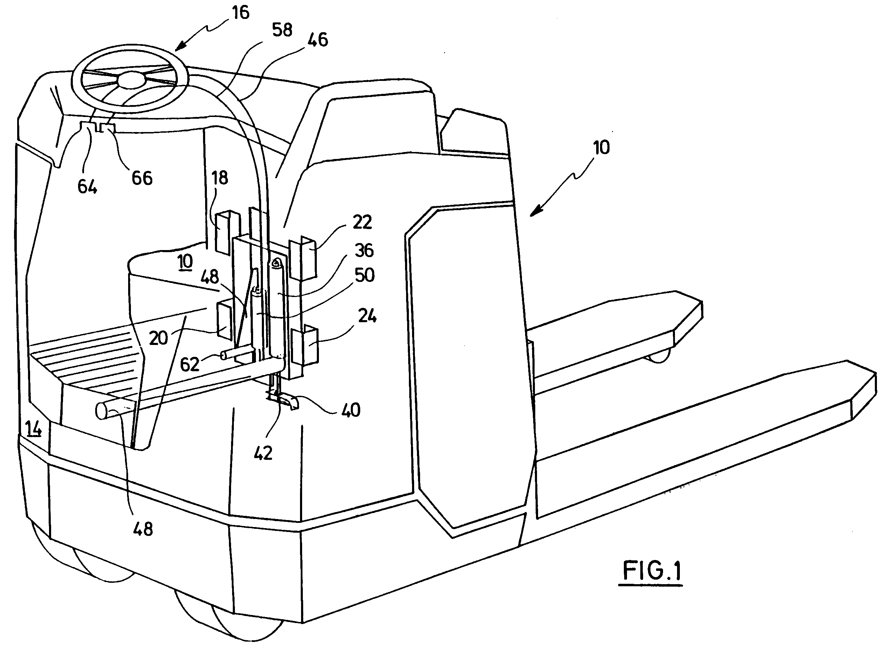

- Fig. 1: zeigt perspektivisch und schematisch ein Quersitzfahrzeug mit einer Bodenplatte nach der Erfindung.
- Fig. 2: zeigt teilweise im Schnitt eine Seitenansicht der erfindungsgemäßen Bodenplatte mit dem Verstellmechanismus.
- Fig. 3: zeigt eine gegenüber Fig. 2 um 90° verdrehte Seitenansicht der Bodenplatte mit Verstellmechanismus.

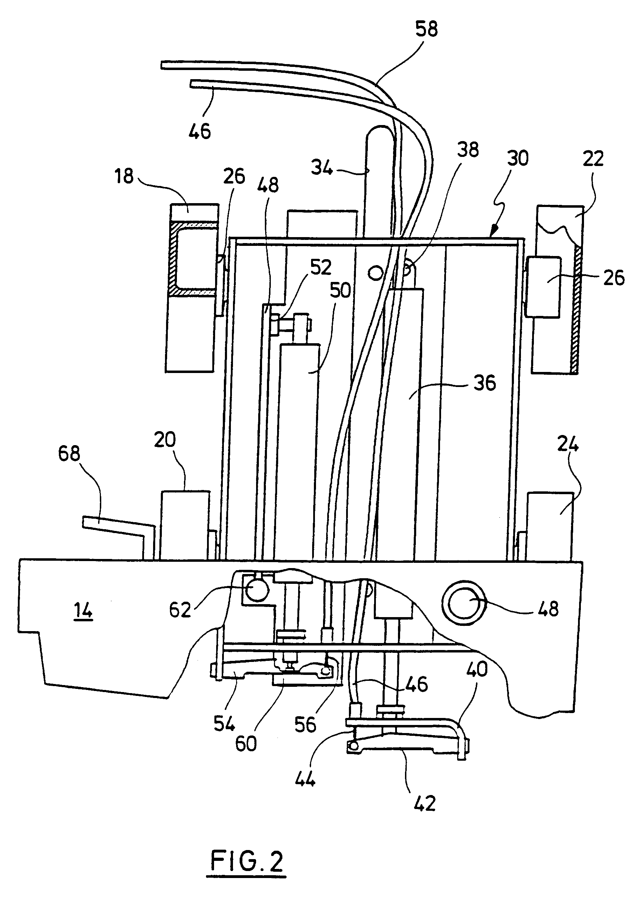

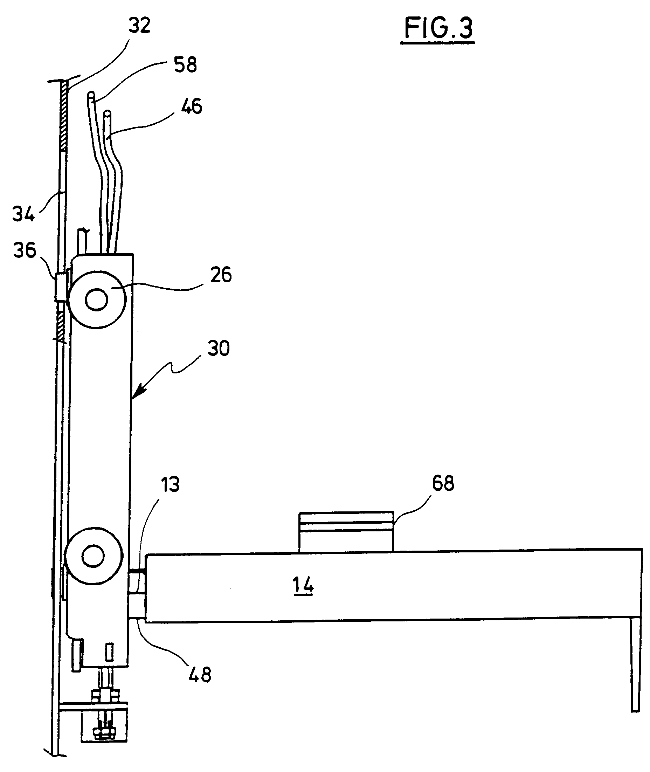

Ein Quersitzförderfahrzeug 10 weist im Aufenthaltsbereich des Fahrers einen Sitz 12 auf (der teilweise weggebrochen gezeichnet ist) sowie eine Bodenplatte 14 und ein Lenkrad 16. Seitlich neben dem Sitz 12 sind vier im Querschnitt U-förmige Führungsabschnitte 18, 20, 22 und 24 fahrzeugfest angebracht. Mittels entsprechender Rollen 26 (siehe Fig. 2) ist ein Schlitten 30 vertikal geführt. Ein fahrzeugfestes Blech 32 (Fig. 3) weist zwei vertikale Langlöcher 34 auf zur Aufnahme mindestens je einer Rolle 36, die ebenfalls am Schlitten 30 drehbar gelagert ist. Sie dient ebenfalls zur seitlichen Führung des Schlittens 30.

Eine erste Gasdruckfeder 36 greift an einem Ende bei 38 am Schlitten 30 an. Am entgegengesetzten Ende greift sie über ihre Stange an einem fahrzeugfesten Bauteil 40 an. Am Bauteil 40 ist an dem einen Ende auch ein Hebel 42 schwenkbar gelagert, dessen anderes Ende mit dem Kabel 44 eines Bowdenzugs 46 verbunden ist. Durch Verschwenken des Hebels 42 in Uhrzeigerrichtung wird eine Verriegelung der blockierbaren Gasdruckfeder 36 aufgehoben, wodurch die Gasdruckfeder den Schlitten 30 anhebt. Da die Bodenplatte 40 über eine am Schlitten angebrachte und seitlich auskragende Achse 48 schwenkbar abgestützt ist, wird bei dem beschriebenen Anheben des Schlittens 30 auch die Bodenplatte 14 nach oben mitgenommen.

Ein Neigungsbauteil 48 ist höhenverstellbar im Schlitten 30 gelagert. Eine zweite Gasdruckfeder 50 greift bei 52 am Bauteil 48 an. Am entgegengesetzten Ende stützt sich die Gasdruckfeder 50 am Schlitten 30 ab. Ein weiterer Hebel 54 ist an einem Ende schwenkbar am Schlitten gelagert, während das andere Ende mit dem Kabel 56 eines zweiten Bowdenzugs 58 verbunden ist. Wird der Hebel 54 entgegen der Uhrzeigerrichtung verschwenkt, wird ein Stößel 60 der blockierbaren Gasdruckfeder 50 angehoben, wodurch die Feder 50 ausfährt und über einen Zapfen 62, der gelenkig an der Bodenplatte 14 im Abstand zur Achse 48 angebracht ist, die Bodenplatte 14 nach oben schwenkt.

Die Bowdenzüge 46, 58 werden durch Taster 64, 66 betätigt. Während der Betätigungszeit können die Gasdruckfedern 36, 50 die zugehörigen Teile betätigen. Ist hingegen die von den Füßen des Fahrers ausgeübte Kraft größer, wird die Bodenplatte 14 nach unten bewegt bzw. entgegengesetzt dem Uhrzeigersinn verschwenkt.

Ein Pedal 68, mit dem zum Beispiel die Stromzufuhr zum Fahrmotor eingestellt wird, ist relativ zur Bodenplatte 14 fest, so daß es seine relative Position auch bei Verstellung der Bodenplatte 14 nicht ändert.

## Patentansprüche

1. Verstellbare Bodenplatte für ein Flurförderzeug, wobei die Bodenplatte sowohl in der Höhe als auch in der Neigung einstellbar ist, dadurch gekennzeichnet, daß am Rahmen des Förderzeugs (10) an einer Seite der Bodenplatte (14) ein Schlitten (30) höhenverstellbar geführt ist, an dem eine sich am Rahmen abstützende erste Verstellvorrichtung (36) angreift, am Schlitten (30) eine zweite Verstellvorrichtung (50) angebracht ist, die im Abstand zur ersten Verstellvorrichtung (36) gelenkig an der Bodenplatte (14) angreift.

2. Verstellbare Bodenplatte nach Anspruch 1, dadurch gekennzeichnet, daß erste und/oder zweite Verstellvorrichtung eine Feder aufweisen und Verriegelungsmittel vorgesehen sind, die den Schlitten in vorgegebenen Positionen verriegeln.

3. Verstellbare Bodenplatte nach Anspruch 2, dadurch gekennzeichnet, daß die Feder eine blockierbare Gasdruckfeder (36, 50) ist.

4. Verstellbare Bodenplatte nach Anspruch 3, dadurch gekennzeichnet, daß die Entriegelung der blockierbaren Gasdruckfeder (36, 50) mittels eines Bowdenzugs (46, 58) erfolgt, der über ein Betätigungselement (64, 66) vom Fahrer betätigbar ist.

5. Verstellbare Bodenplatte nach einem der Ansprüche 1 bis 4, dadurch gekennzeichnet, daß der Schlitten (30) auf beiden Seiten Führungsrollen (26) aufweist, die in fahrzeugfesten Führungen (18, 20, 22, 24) geführt sind.

6. Verstellbare Bodenplatte nach Anspruch 5, dadurch gekennzeichnet, daß im Querschnitt U-förmige Führungen (18, 20, 22, 24) vorgesehen sind.

7. Verstellbare Bodenplatte nach Anspruch 5 oder 6, dadurch gekennzeichnet, daß eine weitere vertikale, mit einer Rolle (36) zusammenwirkende Führung (34) vorgesehen ist, die zwischen den Seiten des Schlitzes (30) angeordnet ist.

8. Verstellbare Bodenplatte nach einem der Ansprüche 1 bis 7, dadurch gekennzeichnet, daß an dem Schlitten eine seitlich auskragende Achse (48) angebracht ist, auf der die Bodenplatte (14) schwenkbar gelagert ist.

9. Verstellbare Bodenplatte nach einem der Ansprüche 1 bis 8, dadurch gekennzeichnet, daß ein an der Bodenplatte (14) angreifendes Neigungsbauteil (48) höhenverstellbar am Schlitten (30) gelagert ist und die zweite Verstellvorrichtung (50) am Neigungsbauteil (48) angreift.

10. Verstellbare Bodenplatte nach Anspruch 9, dadurch gekennzeichnet, daß ein Zapfen (62) des Neigungsbauteils (48) in eine seitliche Öffnung der Bodenplatte (14) eingreift.

11. Verstellbare Bodenplatte nach einem der Ansprüche 1 bis 10, dadurch gekennzeichnet, daß die Bodenplatte (14) um die Anlenkachse hochklappbar ist.

12. Verstellbare Bodenplatte nach einem der Ansprüche 1 bis 11, dadurch gekennzeichnet, daß der Schlitten (30) neben dem Fahrersitz (10) angeordnet ist.

## Claims

1. An adjustable bottom plate for a lift truck, the bottom plate being adjustable both as to its height and as to its inclination, characterized in that a carriage (30) is guided so as to be adjustable in height along the frame of the lift truck (10) at one side of the bottom plate (14), which carriage is engaged by a first adjustment device (36) supported against the frame, a second adjustment device (50) being mounted to the carriage (30), which second adjustment device pivotally engages the bottom plate (14) in spaced relationship to the first adjustment device (36).

2. The adjustable bottom plate according to claim 1, characterized in that the first and/or the second adjustment device comprise a spring and that there are provided locking means for locking the carriage in predetermined positions.

3. The adjustable bottom plate according to claim 2, characterized in that the spring is a lockable gas compression spring (36,50).

4. The adjustable bottom plate according to claim 3, characterized in that unlocking of the lockable gas compression spring (36,50) is obtained by means of a Bowden wire (46,58) adapted to be actuated via an actuating element (64,66) by the driver.

5. The adjustable bottom plate according to any of claims 1 to 4, characterized in that the carriage (30) includes on both sides guide rollers (26) which are guided in guides (18,20,22,24) fixed to the truck.

6. The adjustable bottom plate of claim 5, characterized in that there are provided guides (18,20,22,24) of U-shaped cross section.

7. The adjustable bottom plate according to claim 5 or claim 6, characterized in that there is provided a further vertical guide (24) cooperating with a roller (36), which guide is disposed between the sides of the carriage (30).

8. The adjustable bottom plate of any of claims 1 to 7, characterized in that there is mounted to the carriage a laterally cantilevered axis (48) to which the bottom plate (14) is pivotally mounted.

9. The adjustable bottom plate according to any of claims 1 to 8, characterized in that an inclination member (48) engaging the bottom plate (14) is mounted to the carriage (30) so as to be adjustable in height and that the second adjusting device (50) engages said inclination member (48).

10. The adjustable bottom plate of claim 9, characterized in that a pin (62) of the inclination member (48) engages into a lateral opening of the bottom plate (14).

11. The adjustable bottom plate according to any of claims 1 to 10, characterized in that the bottom plate (14) is adapted to be folded upwards about its pivotal axis.

12. The adjustable bottom plate according to any of claims 1 to 11, characterized in that the carriage (30) is arranged adjacent the driver's seat (10).

## Revendications

1. Plateforme réglable destinée à un véhicule de manutention au sol, cette plateforme étant réglable aussi bien en hauteur qu'en inclinaison, caractérisée en ce que, sur le châssis du véhicule de manutention (10), d'un côté de la plateforme (14), on peut régler en hauteur un chariot guidé (30), sur lequel agit un premier dispositif de positionnement (36) prenant appui sur le châssis, et, sur le chariot (30), est monté un deuxième dispositif de positionnement (50), qui agit, par une articulation, sur la plateforme (14), à une certaine distance du premier dispositif de positionnement (36).

2. Plateforme réglable suivant la revendication 1, caractérisée en ce que le premier et/ou le deuxième dispositif de positionnement présentent un ressort, et des moyens de verrouillage sont prévus pour verrouiller le chariot dans des positions prédéfinies.

3. Plateforme réglable suivant la revendication 2, caractérisée en ce que le ressort est un ressort à gaz comprimé bloquable (36, 50),

4. Plateforme réglable suivant la revendication 3, caractérisée en ce que le déverrouillage du premier ressort à gaz comprimé bloquable(36) se fait au moyen d'un câble Bowden (46, 58), qui peut être actionné par le conducteur du véhicule, au moyen d'un organe d'actionnement (64, 66).

5. Plateforme réglable suivant l'une des revendications 1 à 4, caractérisée en ce que le chariot (30) présente, sur ses deux côtés, des galets de guidage (26), qui sont guidés dans des moyens de guidage (18,20,22,24) solidaires du véhicule.

6. Plateforme réglable suivant la revendication 5, caractérisée en ce que sont prévus des guides (18,20,22,24) ayant une section en forme de U.

7. Plateforme réglable suivant la revendication 5 ou la revendication 6, caractérisée en ce qu'il est prévu un autre moyen de guidage vertical (34), coopérant en avec un autre galet vertical (36), disposé entre les côtés du chariot (30).

8. Plateforme réglable suivant l'une des revendications 1 à 7, caractérisée en ce qu'un axe (48) dépassant latéralement, sur lequel la plateforme (14) est montée de façon à pouvoir pivoter, est installé sur le chariot.

9. Plateforme réglable suivant l'une des revendications 1 à 8, caractérisée en ce qu'une pièce (48), servant à l'inclinaison attaquant la plateforme (14), est montée sur le chariot (30) de façon à pouvoir être positionnée en hauteur, et que le deuxième dispositif de positionnement (50) agit sur cette pièce (48) servant à l'inclinaison.

10. Plateforme réglable suivant la revendication 9, caractérisée en ce qu'un tourillon (62) de la pièce (48) servant à l'inclinaison est engagé dans une ouverture latérale de la plateforme (14).

11. Plateforme réglable suivant l'une des revendications 1 à 10, caractérisée en ce que la plateforme (14) peut être rabattue vers le haut autour de l'axe d'articulation.

12. Plateforme réglable suivant l'une des revendications 1 à 11, caractérisée en ce que le chariot (30) est disposé à côté du siège (10) du conducteur.
